# FASCICULE DE BREVET EUROPEEN

(11) **EP 2 785 980 B1**
(45) Date de publication et mention de la délivrance du brevet: **24.10.2018**
(21) Numéro de dépôt: 12806572.9
(22) Date de dépôt: 26.11.2012
(51) Int. Cl.: F01D 9/04, F01D 9/06, F01D 5/28

(54) **AUBE DE TURBINE À PALE CREUSE EN MATÉRIAU COMPOSITE, TURBINE OU COMPRESSEUR AYANT UN DISTRIBUTEUR OU REDRESSEUR FORME DE TELLES AUBES ET TURBOMACHINE LES COMPRENANT**
TURBINENSCHAUFEL MIT HOHLEM SCHAUFELBLATT AUS VERBUNDSTOFF, TURBINE ODER KOMPRESSOR MIT EINER LEITSCHAUFELANORDNUNG AUS SOLCHEN SCHAUFELN UND TURBOMASCHINE DAMIT
HOLLOW-BLADE TURBINE VANE MADE FROM COMPOSITE MATERIAL, TURBINE OR COMPRESSOR INCLUDING A NOZZLE OR GUIDE VANE ASSEMBLY FORMED BY SUCH BLADES, AND TURBOMACHINE COMPRISING SAME

(30) Priorité: 01.12.2011 FR 1103661
(43) Date de publication de la demande: 08.10.2014
(73) Titulaire: Safran Ceramics, 33185 Le Haillan (FR); Safran Aircraft Engines, 75015 Paris (FR)
(72) Inventeur: FREMONT, Elric, F-33700 Merignac (FR); BEAUJARD, Antoine, 94550 Chevilly Larue (FR); FABRE, Didier, F-77210 Avon (FR); BURLET, Guy, F-31300 Toulouse (FR)
(74) Mandataire: Desormiere, Pierre-Louis
(86) Numéro de dépôt international: PCT/FR2012/052722
(87) Numéro de publication internationale: WO 2013/079859

(56) Documents cités:
- WO-A1-2010/110325
- FR-A1- 2 625 528
- JP-A- 2003 148 105
- JP-A- 2010 229 006
- US-A- 3 442 442
- US-A- 3 572 971
- US-A- 5 569 019
- US-A1- 2009 317 246
- US-A1- 2011 008 156

## Description

### Arrière-plan de l'invention

L'invention se rapporte aux turbomachines, notamment pour turbomoteurs aéronautiques ou turbines industrielles et vise notamment des aubes de distributeur de turbine ou de redresseur de compresseur à pales creuses.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice au moins majoritairement en céramique (CMC). En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plate-forme et talon intégrés. L'utilisation de matériaux CMC pour des distributeurs de turbine a aussi été proposée, notamment dans le document WO 2010/146288.

Il est bien connu par ailleurs de réaliser des distributeurs de turbine, notamment des distributeurs basse-pression, avec des aubes à pales creuses, c'est-à-dire avec des pales présentant un passage longitudinal interne sur toute leur longueur entre leurs extrémités extérieure et intérieure. De tels passages permettent d'acheminer un flux d'air de ventilation de l'extérieur vers l'intérieur, notamment pour le refroidissement de disques de roues mobiles de turbine.

Un secteur de distributeur en matériau composite à pales creuses est décrit dans le document US 2011/0008156. Le renfort fibreux du matériau composite est formé de plis bidimensionnels empilés, une partie des plis de renfort de pale s'étendant jusqu'à une partie épaisse de l'extrémité amont de la plate-forme extérieure du secteur.

Des documents US 3,572,971 et US 3,442,442 une autre aube de turbomachine est connue.

### Objet et résumé de l'invention

Un but de l'invention est de permettre un montage aisé d'aubes en matériau composite à pales creuses dans un carter avec reprise efficace des efforts exercés sur les pales.

Selon un aspect de l'invention, ce but est atteint grâce à une aube de turbomachine en matériau composite selon la revendication 1 comprenant une texture de renfort fibreux densifiée par une matrice, l'aube comportant une pale creuse avec un passage interne s'étendant sur toute sa longueur entre une paroi intrados et une paroi extrados de la pale, ainsi qu'une plate- forme intérieure et une plate-forme extérieure solidaires de la pale, la pale étant prolongée du côté extérieur de la plate-forme extérieure par une partie d'accrochage amont et une partie d'accrochage aval pour le montage de l'aube dans un carter, les parties d'accrochage étant formées par des pattes d'accrochage recourbées situées chacune dans le prolongement d'une partie de paroi intrados ou d'une partie de paroi extrados de la pale à partir d'une extrémité longitudinale extérieure, et la texture de renfort fibreux de chaque patte d'accrochage est dans la continuité de la texture de renfort fibreux de la paroi intrados ou de la paroi extrados de la pale dans le prolongement de laquelle elle se situe.

Une telle disposition permet un montage par crochets similaire à celui couramment utilisé pour des aubes métalliques, donc une intégration aisée dans un environnement existant, et assure une transmission optimale des efforts entre la pale et les crochets.

La partie d'accrochage aval peut comprendre au moins une patte d'accrochage aval située dans le prolongement d'une partie de la paroi extrados ou de la paroi intrados entre un bord d'attaque et un bord de fuite de la pale.

La partie d'accrochage amont peut comprendre au moins une patte d'accrochage amont située dans le prolongement d'une partie de la paroi intrados ou de la paroi extrados au voisinage d'un bord d'attaque de la pale.

Selon un mode de réalisation, la partie d'accrochage amont comprend deux pattes d'accrochage amont situées respectivement dans le prolongement d'une partie de la paroi intrados et dans le prolongement d'une partie de la paroi extrados au voisinage du bord d'attaque de la pale. Un positionnement de la partie d'accrochage au niveau du centre de poussée, au voisinage du bord d'attaque, permet une bonne reprise des efforts aérodynamiques exercés sur la pale.

Selon un mode de réalisation, du côté intérieur de la plate-forme intérieure, la pale est prolongée par des pattes intérieures s'étendant à partir d'extrémités longitudinales intérieures des parois intrados et extrados de la pale avec continuité de texture fibreuse de renfort entre lesdites parois et les pattes.

Les pattes intérieures peuvent comprendre au moins une patte intérieure aval située dans le prolongement d'une partie de la paroi extrados ou de la paroi intrados entre le bord d'attaque et le bord de fuite de la pale.

Les pattes intérieures peuvent comprendre au moins une patte intérieure amont située dans le prolongement d'une partie de la paroi intrados ou de la paroi extrados au voisinage d'un bord d'attaque de la pale.

Les pattes intérieures peuvent comprendre deux pattes intérieures amont situées respectivement dans le prolongement d'une partie de paroi intrados et d'une partie de paroi extrados au voisinage du bord d'attaque de la pale.

Selon un mode de réalisation avantageux, la texture de renfort fibreux de la pale est en tissu obtenu par tissage tridimensionnel.

Avantageusement, il existe une continuité de la texture de renfort fibreux entre la pale et les plates-formes intérieure et extérieure.

Selon un autre de ses aspects, l'invention vise une turbine de turbomachine ayant un carter de turbine et au moins un distributeur de turbine comportant un ensemble d'aubes telles que définies ci-avant, et vise aussi un compresseur de turbomachine ayant un carter de compresseur et au moins un redresseur de compresseur comportant un ensemble d'aubes telles que définies ci-avant.

De préférence, les aubes sont montées dans le carter de turbine ou de compresseur avec une virole d'étanchéité disposée du côté extérieur des aubes et présentant des orifices communiquant avec les passages internes des pales des aubes.

Selon un mode de réalisation, des tubes de ventilation s'étendent dans les passages internes des aubes et sont reliés à la virole par des pièces de liaison tubulaires.

Selon encore un autre de ses aspects, l'invention vise une turbomachine ayant une turbine et/ou un compresseur tels que définis ci-avant.

### Brève description des dessins

L'invention sera mieux comprise à la lecture de la description faite ci-après, à titre indicatif mais non limitatif, en référence aux dessins annexés sur lesquels :
- la figure 1 est une vue schématique en perspective d'une aube de distributeur de turbine selon un mode de réalisation de l'invention ;
- la figure 2 est une vue schématique partielle en coupe de la partie extérieure de l'aube de la figure 1 assemblée avec une virole d'étanchéité
- la figure 3 est une vue schématique partielle en perspective de la partie intérieure de l'aube de la figure 1 ;
- la figure 4 est une vue très schématique partielle en démi-coupe axiale d'une turbine de turbomachine aéronautique;
- la figure 5 est une vue schématique en plan d'une ébauche fibreuse tissée destinée à la réalisation d'une préforme fibreuse pour une aube du type de celle de la figure 1, selon un premier procédé de fabrication d'une telle aube ;
- la figure 6 est une vue latérale de l'ébauche de la figure 5 ;
- la figure 7 est une vue schématique en coupe selon le plan VII-VII de la figure 5 ;
- les figures 8 et 9 sont des vues schématiques de plans de tissage de l'ébauche de la figure 2, vues en coupe selon les plans VIII-VIII et IX-IX de la figure 2 ;
- les figures 10 à 13 sont des vues schématiques montrant des étapes de la réalisation d'une préforme d'aube à partir de l'ébauche fibreuse des figures 5 à 9 ;
- la figure 14 est une vue schématique partielle en perspective montrant une variante de réalisation de l'aube de la figure 1 ;
- la figure 15 est une vue schématique en perspective d'une ébauche fibreuse destinée à la réalisation d'une préforme fibreuse de pale pour une aube du type de celle de la figure 1, selon un deuxième procédé de fabrication d'une telle aube ;
- les figures 16 et 17 sont des vues schématiques en perspective de préformes consolidées de plate-forme intérieure et de plate-forme extérieure, respectivement, destinées à la réalisation d'une préforme d'aube selon le deuxième procédé de fabrication ; et
- les figures 18 et 19 montrent deux étapes d'obtention d'une préforme d'aube à partir de l'ébauche fibreuse de la figure 15 et des préformes consolidées des figures 16 et 17, selon le deuxième procédé de fabrication.

### Description détaillée de modes de réalisation

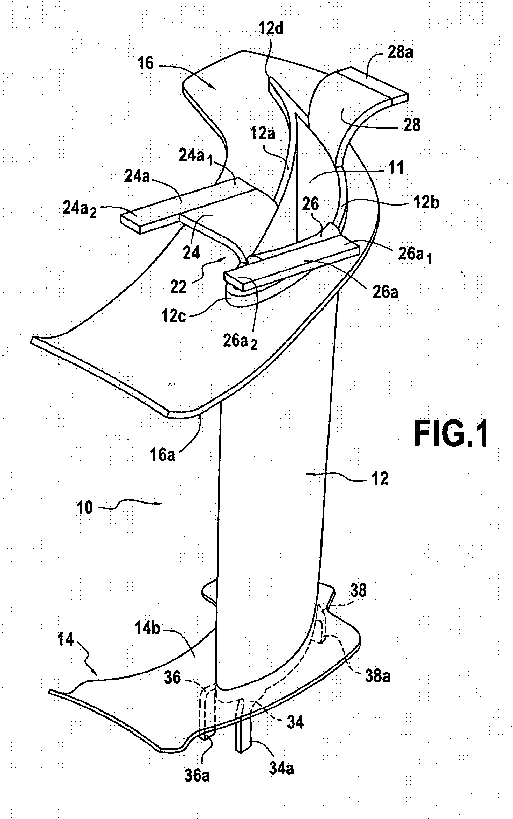

La figure 1 montre très schématiquement une aube fixe 10 de distributeur de turbine d'une turbomachine, par exemple un turbomoteur aéronautique. L'aube 10 est en matériau CMC et comprend une pale 12 et des plates-formes intérieure 14 et extérieure 16.

Dans tout le texte, les termes "intérieur" et "extérieur" sont utilisés en référence à la position radiale par rapport à l'axe de la turbomachine.

La face extérieure 14b de la plate-forme 14 et la face intérieure 16a de la plate-forme 16 sont destinées à délimiter la veine d'écoulement de gaz dans la turbine après montage de l'aube 10 dans un carter de turbine.

La pale 12 s'étend entre les plates-formes 14 et 16, dont elle est solidaire et, à ses extrémités, fait saillie du côté intérieur de la plate-forme 14 et du côté extérieur de la plate-forme 16. La pale 12 est creuse avec un passage interne longitudinal 11 qui s'étend tout le long de la pale et débouche à ses deux extrémités. De façon bien connue, le passage 11 est notamment destiné à permettre le passage d'un flux d'air de refroidissement.

Dans l'exemple illustré, les plates-formes 14, 16 s'étendent entre leurs extrémités amont et aval suivant des directions générales qui forment des angles non nuls par rapport à un plan normal à la direction longitudinale de la pale 12.

Dans tout le texte, les termes "amont" et "aval" sont utilisés en référence au sens d'écoulement de flux dans la turbomachine.

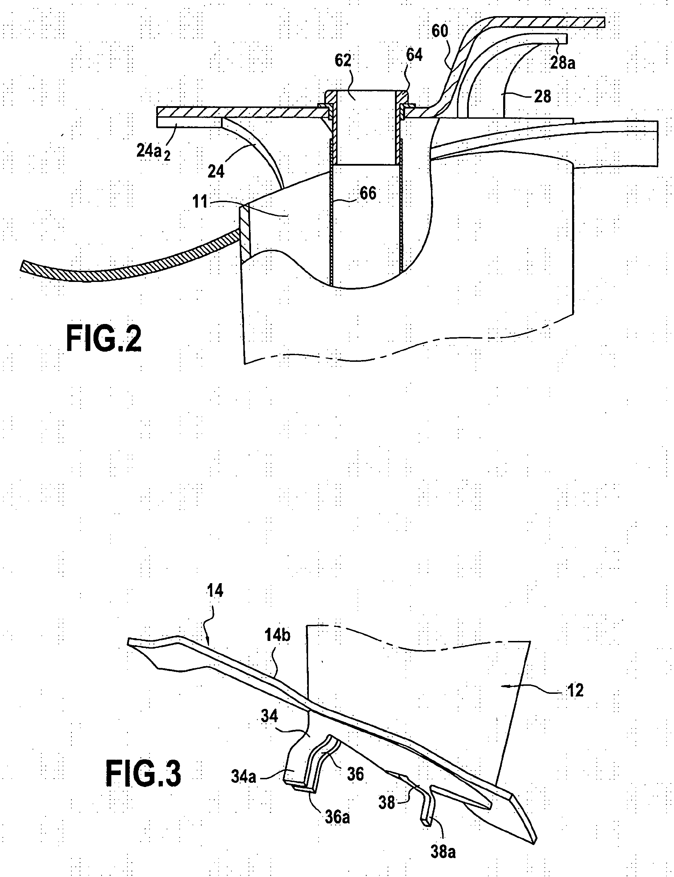

A son extrémité extérieure (figures 1 et 2), du côté extérieur de la plate-forme 16, la pale 12 est prolongée par une partie d'accrochage amont 22 et une partie d'accrochage aval 28.

Dans l'exemple illustré, la partie d'accrochage amont 22 est formée de deux pattes d'accrochage 24, 26 situées respectivement dans le prolongement d'une partie de la paroi intrados 12a de la pale 12 et dans le prolongement d'une partie de la paroi extrados 12b de la pale 12, au voisinage du bord d'attaque 12c de la pale 12. La paroi intrados 12a délimite la face intrados de la pale 12, du côté externe, et le passage 11, du côté interne. La paroi extrados 12b délimite la face extrados de la pâle 12, du côté externe, et le passage 11, du côté interne.

Les pattes d'accrochage 24, 26 ont des formes recourbées vers l'intrados et l'extrados, respectivement, et ont des parties terminales 24a, 26a qui s'étendent sensiblement axialement avec leurs faces extérieure et intérieure situées sensiblement sur des mêmes surfaces annulaires respectives, l'axe ici considéré étant celui de la turbine dans laquelle l'aube est destinée à être montée. Les parties terminales 24a, 26a sont raccordées aux parois intrados et extrados de la pale 12 sur une partie seulement 24a₁, 26a₁ de leur dimension axiale, à partir de leur extrémité aval, les parties d'extrémité amont 24a₂, 26a₂ des parties terminales 24a, 26a s'étendant librement.

La partie d'accrochage aval 28 forme une seule patte d'accrochage située dans le prolongement d'une partie de la paroi extrados 12b de la pale 12, entre le bord d'attaque 12c et le bord de fuite 12d de la pale 12. La patte d'accrochage 28 a une forme recourbée vers l'extrados et la partie terminale aval 28a de la patte d'accrochage 28 a ses faces extérieure et intérieure situées sensiblement sur des surfaces annulaires respectives.

On a envisagé la réalisation de la partie d'accrochage amont 22 par deux pattes d'accrochage de part et d'autre du bord d'attaque. En variante, on pourrait toutefois prévoir une seule patte d'accrochage amont.

On a envisagé la réalisation de la partie d'accrochage aval 28 par une seule patte d'accrochage. En variante, on pourrait prévoir plus d'une patte d'accrochage aval, chacune étant dans le prolongement d'une partie de la paroi extrados 12b de la pale 12.

A son extrémité intérieure (figures 1 et 3), du côté intérieur de la plate-forme 14, la pale 12 peut être prolongée par des pattes intérieures amont 34, 36 et une patte intérieure aval 38.

Les pattes intérieures amont 34, 36 sont situées respectivement dans le prolongement d'une partie de la paroi intrados 12a de la pale 12 et dans le prolongement d'une partie de la paroi extrados 12b de la pale 12, au voisinage du bord d'attaque 12c de la pale 12. Les parties terminales 34a, 36a des pattes intérieures 34, 36 s'étendent sensiblement radialement.

La patte intérieure aval 38 est située dans le prolongement d'une partie de la paroi extrados 12b de la pale 12, entre le bord d'attaque 12c et le bord de fuite 12d de la pale 12. La partie terminale 38a de la patte intérieure 38 s'étend sensiblement radialement. En variante, la patte intérieure aval pourrait être située dans le prolongement d'une partie de la paroi intrados 12a de la pale 12.

Des modes de réalisation d'une aube telle que l'aube 10 avec une texture de renfort fibreux en un tissu obtenu par tissage tridimensionnel seront décrits plus loin. La fabrication de l'aube 10 comprend la formation d'une préforme fibreuse ayant une forme correspondant à celle de l'aube et la densification de la préforme par une matrice céramique.

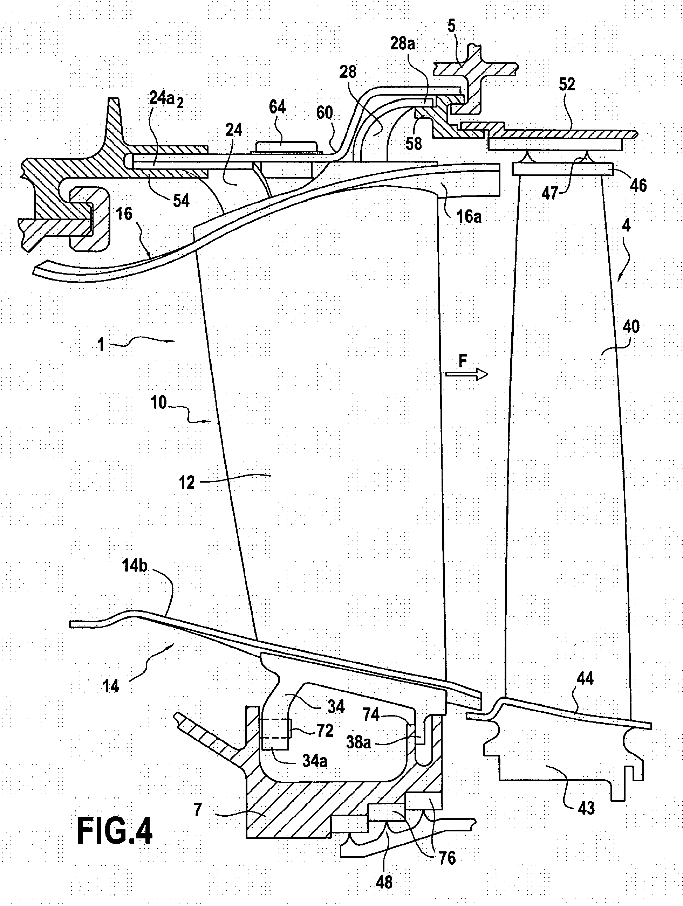

La figure 4 montre partiellement une turbine de turbomachine aéronautique, par exemple une turbine basse pression ayant un distributeur de turbine 1, comprenant une pluralité d'aubes 10 telles que celle des figures 1 à 3, et une roue mobile 4. Le distributeur 1 est monté dans un carter métallique extérieur de turbine 5. La turbine peut comprendre plusieurs distributeurs fixes alternant avec des roues mobiles dans le sens d'écoulement du flux gazeux dans la turbine (flèche F).

Chaque roue mobile comprend une pluralité d'aubes 40 ayant une plate-forme intérieure 44, une plate-forme extérieure ou talon 46 et une pale 42 s'étendant entre les plates-formes 44, 46 et liée à celles-ci. Du côté intérieur de la plate-forme 44, l'aube se prolonge par un pied engagé dans un logement d'un disque 43 d'un rotor de turbine. Du côté extérieur, le talon 46 supporte des léchettes 47 en regard d'un matériau abradable porté par un anneau sectorisé 52 solidaire du carter extérieur 5, pour assurer l'étanchéité aux sommets des aubes 40. Les aubes 40 peuvent être des aubes métalliques traditionnelles ou des aubes en matériau CMC obtenues par exemple comme décrit dans les documents précités WO 2010/061140, WO 2010/116066 ou WO 2011/080443.

Du côté extérieur, les parties d'extrémité libres 24a₂, 26a₂ des parties terminales des pattes d'accrochage amont 24, 26 des aubes 10 du distributeur 1 sont engagées dans une gorge d'un crochet 54 solidaire du carter extérieur 5 tandis que les parties terminales 28a des pattes d'accrochage aval 28 des aubes 10 sont engagées sur une face annulaire extérieure d'une pièce 58 solidaire du carter extérieur 5. Le montage du distributeur 1 dans le carter extérieur 5 est donc similaire à celui d'un distributeur métallique traditionnel.

Une virole annulaire d'étanchéité 60 (figures 2 et 4) s'étend du côté extérieur des aubes 10. Dans l'exemple illustré, du côté amont, la virole 60 prend appui sur les faces extérieures des parties terminales 24a, 26a des pattes d'accrochage 24, 26. Du côté aval, la virole 60 s'appuie sur une face annulaire extérieure de la pièce 58 distincte de celle sur laquelle les parties terminales des pattes d'accrochage 28 prennent appui. En variante, la virole 60 pourrait, du côté amont, être engagée dans une gorge autre que celle dans laquelle les parties terminales des pattes d'accrochage 24, 26 sont engagées. Toujours en variante, la virole pourrait prendre appui du côté amont et du côté aval sur les parties terminales des pattes d'accrochage 24, 26 et des pattes 28.

Dans l'exemple illustré, on note que les parties terminales 24a, 26a des pattes d'accrochage sont engagées dans le crochet 54 sur la plus grande partie de leur dimension axiale.

La communication entre l'extérieur de la virole 60 et les passages internes 11 des pales creuses 12 des aubes 10 est réalisée à travers des orifices 62 formés dans la virole 60 en regard des extrémités extérieures des passages internes 11 (figure 2). Des pièces de liaison tubulaires sous forme d'inserts 64 sont engagés dans les orifices 62 pour le raccordement de tubes de ventilation 66 s'étendant dans les passages internes 11, le long de ceux-ci.

Du côté intérieur, les pattes intérieures 34, 36 ont leurs parties terminales 34a, 36a qui s'appuient circonférentiellement sur des butées 72 solidaires d'un carter intérieur métallique 7 de la turbine, tandis que la patte intérieure 38 a sa partie terminale qui s'appuie axialement sur une butée 74 solidaire du carter intérieur 7. Des léchettes 48 solidaires du rotor de turbine coopèrent avec un revêtement abradable 76 porté par le carter intérieur pour assurer une étanchéité du côté intérieur.

Ainsi, un degré de liberté en direction radiale est ménagé entre le distributeur de turbine 1 et le carter intérieur 7.

En variante, les pattes intérieures 34, 38, 38 pourraient être utilisées pour supporter un anneau sectorisé portant le revêtement abradable.

Un premier procédé de fabrication d'une aube 10 telle que celle des figures 1 à 3 sera maintenant décrit.

Le procédé comprend la formation d'une préforme fibreuse ayant une forme correspondant à celle de l'aube et la densification de la préforme par une matrice.

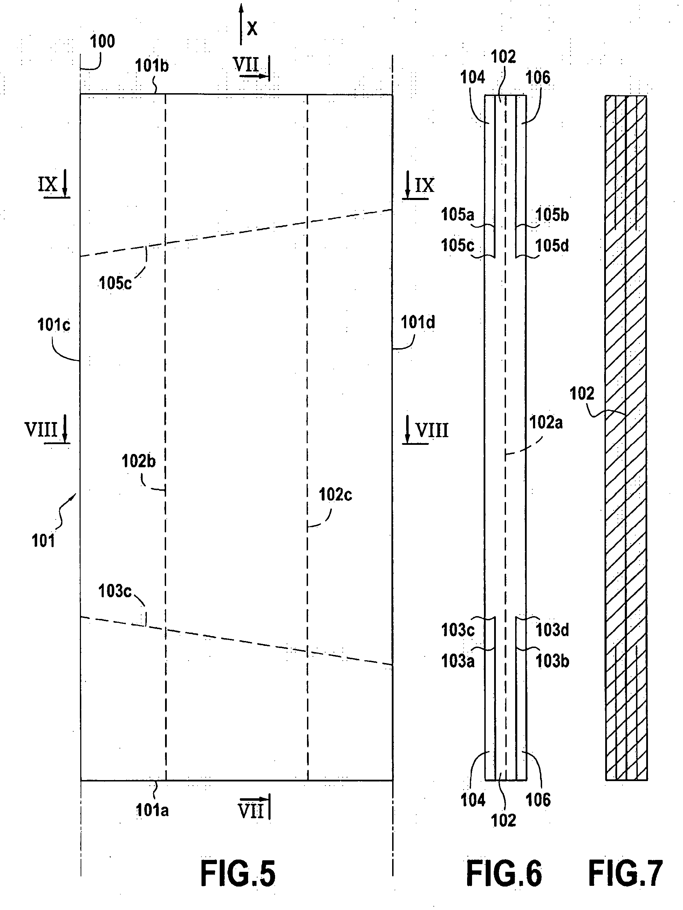

La figure 5 montre en plan une ébauche fibreuse 101 à partir de laquelle une préforme fibreuse de l'aube 10 peut être formée.

L'ébauche 101 est ici obtenue à partir d'une bande 100 tissée par tissage tridimensionnel (3D) ou multicouches, la bande 100 s'étendant de façon générale dans une direction X correspondant à la direction longitudinale de l'aube à fabriquer. Le tissage est réalisé par exemple avec des fils de chaîne s'étendant dans la direction X.

Comme montré par les figures 5 à 7, l'ébauche 101 comprend, dans son épaisseur, une première partie 102 située entre une deuxième partie 104 et une troisième partie 106, la partie 102 étant liée aux parties 104 et 106 par tissage 3D sauf au niveau de déliaisons 103a, 105a entre la partie 102 et la partie 104 et de déliaisons 103b, 105b entre la partie 102 et la partie 106. Les déliaisons 103a, 103b s'étendent sur toute la largeur de l'ébauche 101 (dimension en sens trame) à partir d'une extrémité 101a de l'ébauche 101 jusqu'à des fonds de déliaison 103c et 103d. Les fonds de déliaison 103c et 103d s'étendent entre les bords longitudinaux 101c et 101d de l'ébauche 101 suivant une direction faisant un angle non nul par rapport à la direction trame afin de respecter l'orientation de la plate-forme intérieure 14. Les déliaisons 105a, 105b s'étendent sur toute la largeur de l'ébauche 101 à partir de l'autre extrémité 101b de l'ébauche 101 jusqu'à des fonds de déliaison 105c et 105d. Les fonds de déliaison 105c et 105d s'étendent entre les bords longitudinaux 101c et 101d de l'ébauche 101 suivant une direction faisant un angle non nul par rapport à la direction trame afin de respecter l'orientation de la plate-forme extérieure 16.

En outre, une déliaison 102a est formée sensiblement au milieu de la partie 102, sur toute la longueur de l'ébauche 101 et à distance entre les bords longitudinaux 101c et 101d, entre des limites 102b et 102c. La déliaison 102a est destinée à permettre la formation du passage interne de la pale creuse de l'aube à fabriquer.

De façon bien connue, une déliaison est ménagée entre deux couches de fils de chaîne en omettant de faire passer un fil de trame à travers la zone de déliaison pour lier des fils de couches de chaîne situées de part et d'autre de la déliaison.

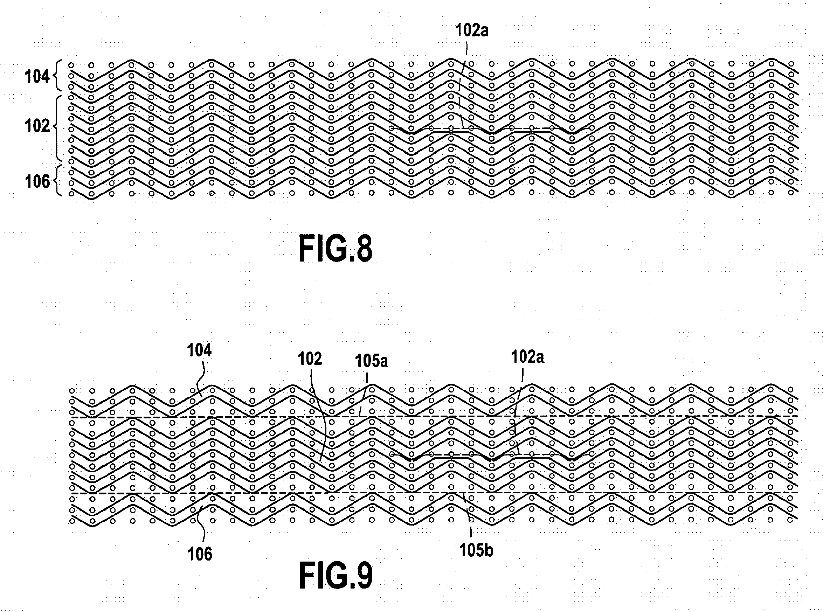

Les plans des figures 8 et 9 montrent un exemple de tissage 3D avec armure interlock et déliaisons 102a, 105a et 105b, les déliaisons 103a et 103b étant obtenues de la même façon que les déliaisons 105a et 105b. Sur les figures 8 et 9, les déliaisons sont représentées par des tirets. La partie 102 comprend une pluralité de couches de fils de chaîne (six dans l'exemple illustré) qui sont liées par tissage 3D sauf au niveau de la déliaison 102a. Les parties 104 et 106 comprennent chacune une pluralité de couches de fils de chaîne (trois dans l'exemple illustré) qui sont liées entre elles par tissage 3D. Hors la déliaison 102a, entre les fonds de déliaison 103c et 105c et entre les fonds de déliaison 103d et 105d, les couches de fils de chaîne des parties 102, 104 et 106 sont, dans l'exemple illustré, toutes liées entre elles.

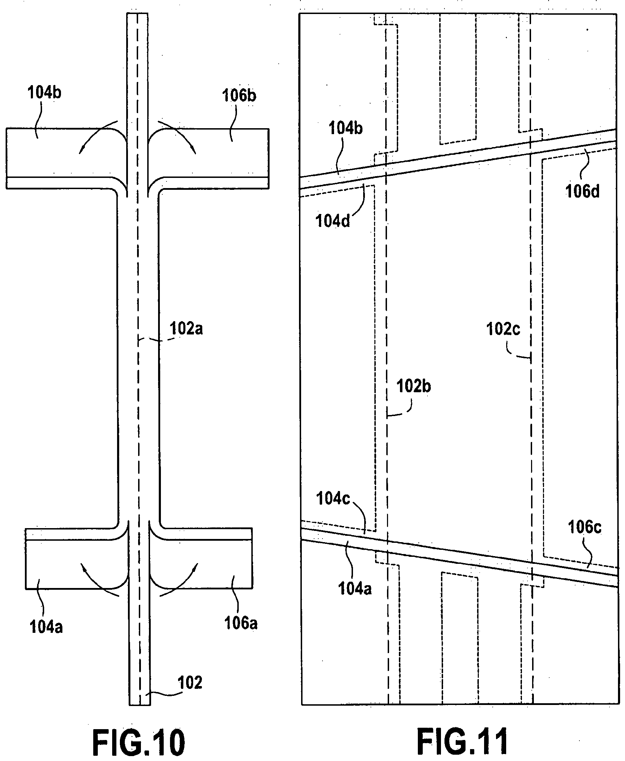

Après tissage, les segments 104a, 104b et 106a, 106b des parties 104, 106 non liées à la partie 102 sont dépliés comme montré sur la figure 10 en vue de former des parties de préforme pour les plates-formes 14, 16, les segments 104a, 104b étant adjacents aux déliaisons 103a, 105a et les segments 106a, 106b étant adjacents aux déliaisons 103b, 105b. Les dépliages sont réalisés au niveau des fonds de déliaison.

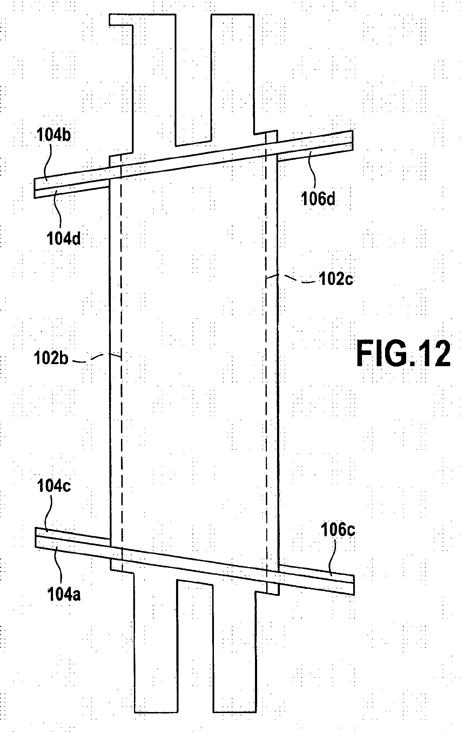

Ensuite, les découpes sont pratiquées suivant les lignes indiquées en pointillés sur la figure 11 pour éliminer les portions excédentaires, d'une part, dans les segments de la partie 102 situés du côté intérieur des segments dépliés 104a, 106a et du côté extérieur des segments dépliés 104b, 106b et, d'autre part, dans le segment de l'ébauche 101 s'étendant entre les segments dépliés, de manière à ne laisser que les parties utiles pour former une partie de préforme pour la pale de l'aube à fabriquer et pour former des parties de préforme pour les pattes d'accrochage extérieures et de pattes intérieures. De préférence, on laisse aussi subsister une liaison tissée entre les parties 102, 104 et 106 sur toute la largeur de l'ébauche 101 dans des zones s'étendant le long des raccordements des segments 104a, 104b, 106a, 106b avec le reste de l'ébauche, formant ainsi des cordons 104c, 106c et 104d, 106d. Cela permet de sécuriser la continuité de la liaison entre les segments 104a, 106a et entre les segments 104b, 106b. La figure 12 montre le résultat obtenu après découpe. On note que les parties utiles pour former des parties de préforme pour les pattes d'accrochage extérieures et les pattes intérieures s'étendent intégralement dans la continuité de la partie utile pour former la partie de préforme pour la pale.

On notera que le tissage 3D, lors du tissage de l'ébauche 101, pourrait être omis dans au moins une partie des portions éliminées par découpe.

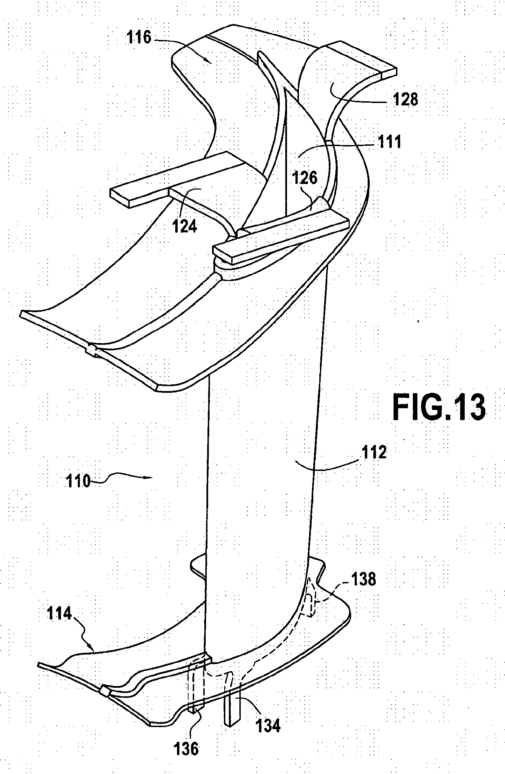

Une préforme fibreuse de l'aube à fabriquer est ensuite réalisée par moulage au moyen d'un outillage de conformation avec déformations pour obtenir le profil de pale creuse désiré et les formes désirées pour les plates-formes. On obtient une préforme 110 (figure 13) avec une partie 112 de préforme pour la pale creuse, des parties 114, 116 de préforme pour les plates-formes intérieure et extérieure, des parties 124, 126, 128 de préforme pour les pattes d'accrochage extérieures et des parties 134, 136, 138 de préforme pour les pattes intérieures. Le passage interne 111 de la partie 112 de préforme pour la pale creuse est formé par introduction d'un élément d'outillage dans la déliaison 102a.

Dans la préforme 110, la partie de préforme 124, 126 ou 128 pour chaque patte d'accrochage extérieure est intégralement dans la continuité de la partie de préforme pour la paroi intrados ou la paroi extrados de la pale dans le prolongement de laquelle elle se situe. Il en est de même pour la partie de préforme pour chaque patte intérieure. Il y a également continuité entre la partie de préforme pour la pale et les parties de préforme pour les plateformes intérieure et extérieure.

Une aube creuse en matériau CMC telle que celle des figures 1 à 3 peut être fabriquée de la façon suivante.

Une bande fibreuse 100 est tissée par tissage tridimensionnel, comprenant une pluralité d'ébauches fibreuses 101 orientées par exemple en sens chaîne, avec zones de déliaison, comme montré sur la figure 5. On peut utiliser pour le tissage des fils en céramique, notamment des fils à base de carbure de silicium (SiC), par exemple ceux fournis sous la dénomination "Nicalon" par la société japonaise Nippon Carbon. D'autres fils en céramique sont utilisables, notamment des fils en oxyde réfractaire, tels que des fils à base d'alumine Al₂O₃, en particulier pour des matériaux CMC de type oxyde/oxyde (fibre du renfort fibreux et matrice en oxyde réfractaire). On pourrait aussi utiliser des fils de carbone pour un matériau CMC à renfort fibreux en carbone.

La bande fibreuse peut être traitée pour éliminer l'ensimage présent sur les fibres et la présence d'oxyde à la surface des fibres, comme connu en soi.

Egalement comme connu en soi, une mince couche de revêtement d'interphase de défragilisation peut être ensuite formée sur les fibres de la bande fibreuse par infiltration chimique en phase gazeuse, ou CVI ("Chemical Vapour Infiltration"). Le matériau d'interphase est par exemple du carbone pyrolytique PyC, du nitrure de bore BN ou du carbone dopé au bore BC. L'épaisseur de la couche formée est par exemple comprise entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. Après séchage, les ébauches fibreuses individuelles sont découpées. Chaque ébauche est mise en forme (comme illustré par les figures 10 à 12) et placée dans un outillage pour conformation des parties de préforme pour la pale, pour les plates-formes intérieure et extérieure et pour les pattes d'accrochage extérieures et pattes intérieures.

Ensuite, la résine est réticulée puis pyrolysée après avoir retiré la préforme de l'outillage de conformation pour obtenir une préforme d'aube consolidée par le résidu de pyrolyse. La quantité de résine de consolidation est choisie suffisante mais sans trop d'excès pour que le résidu de pyrolyse lie les fibres de la préforme afin que celle-ci soit manipulable en conservant sa forme sans l'assistance d'un outillage.

Une deuxième couche de revêtement d'interphase de défragilisation peut être formée par CVI, par exemple en PyC, BN ou BC. La réalisation d'un revêtement d'interphase en deux couches avant et après consolidation est décrite dans le document EP 2 154 119.

Une densification par matrice céramique de la préforme consolidée est ensuite réalisée par exemple par CVI. La matrice peut être en SiC ou être une matrice autocicatrisante comprenant des phases de matrice en carbone pyrolytique PyC, en carbure de bore B₄C ou en système ternaire Si-B-C comme décrit notamment dans les documents US 5 246 756 et US 5 965 266. D'autres types de matrice céramique ou au moins essentiellement en céramique peuvent être envisagés, notamment des matrices en oxyde réfractaire, par exemple en alumine, en particulier pour des matériaux CMC de type oxyde/oxyde.

La densification est de préférence réalisée en deux étapes séparées par une étape d'usinage de l'aube à ses dimensions désirées notamment pour éliminer les nervures issues des cordons 104c, 106c, 104d et 106d, obtenir la forme finale désirée pour les plates-formes 14, 16, les pattes d'accrochage extérieures et les pattes intérieures et éventuellement pour obtenir le profil désiré de la pale 12.

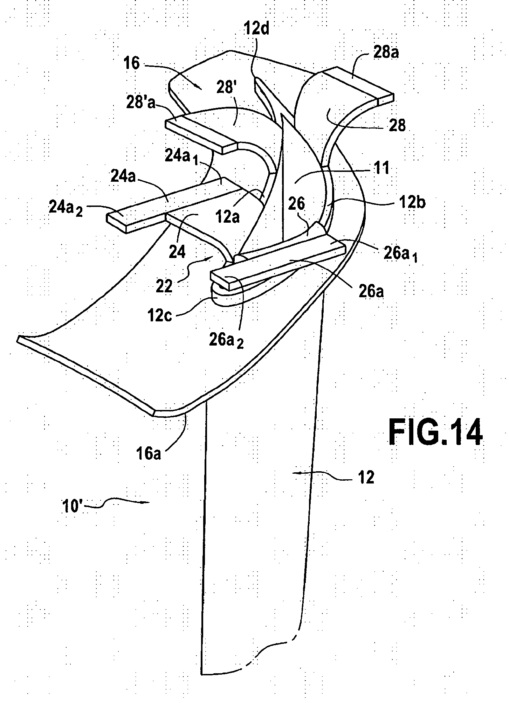

La figure 14 montre partiellement une aube à pale creuse de distributeur de turbine selon une variante de réalisation de l'aube 10 de la figure 1, les parties identiques ou similaires étant désignées par les mêmes signes de référence.

L'aube 10' de la figure 14 se distingue de l'aube 10 de la figure 1 en ce que la partie d'accrochage aval comprend une deuxième patte d'accrochage 28' qui est située dans le prolongement d'une partie de la paroi intrados 12a de la pale 12, sensiblement en regard de la patte d'accrochage 28. La patte d'accrochage 28' a une forme recourbée vers l'intrados et présente une partie terminale 28'a dont les faces extérieure et intérieure sont situées sensiblement sur les mêmes surfaces annulaires respectives que les faces extérieure et intérieure de la partie terminal 28a de la patte d'accrochage 28.

Selon des variantes supplémentaires, on pourrait former la partie d'accrochage aval par la seule patte 28' ou par plusieurs pattes situées dans le prolongement de parties de la paroi intrados 12a de la pale 12.

Bien entendu, du côté intérieur, on pourrait aussi avoir au moins deux pattes intérieures aval situées dans le prolongement d'une partie de la paroi extrados de la pale et d'une partie de la paroi intrados de la pale, respectivement.

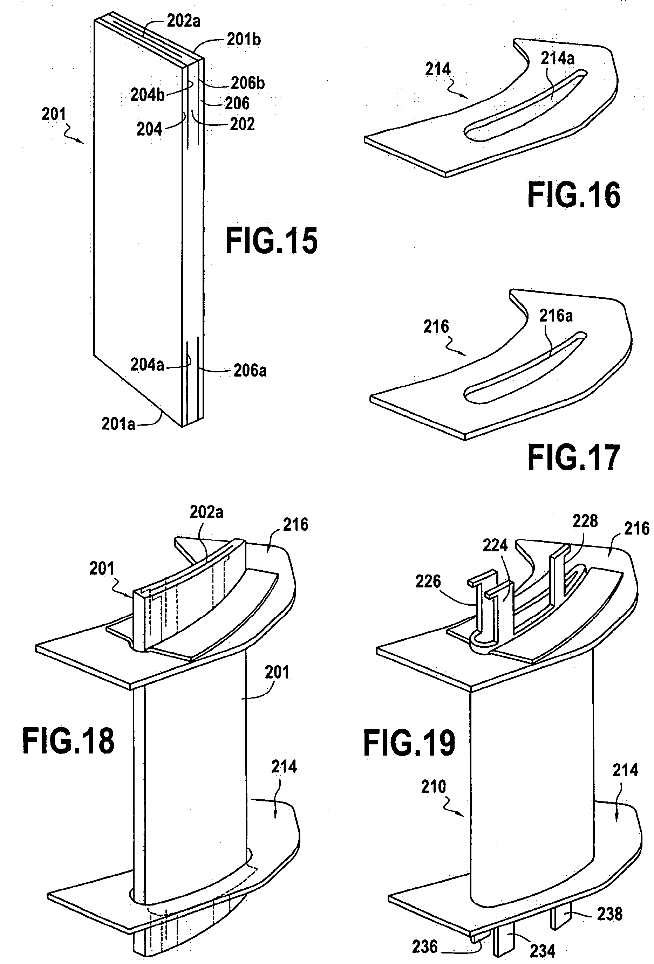

Un deuxième procédé de fabrication d'une aube du type de celle des figures 1 à 3 sera maintenant décrit en référence aux figures 15 à 19.

Une ébauche 201 à partir de laquelle une partie de préforme de pale d'aube est ensuite formée est obtenue à partir d'une bande tissée par tissage 3D.

L'ébauche 201 (figure 15) comprend dans son épaisseur une première partie 202 située entre une deuxième partie 204 et une troisième partie 206. La partie 202 est liée aux parties 204 et 206 par tissage 3D sauf au niveau de déliaisons 204a, 204b et 206a, 206b. Les déliaisons 204a, 206a s'étendent sur toute la largeur de l'ébauche 201 à partir d'une première extrémité longitudinale 201a de celle-ci jusqu'à des fonds de déliaisons situés sensiblement au niveau de l'emplacement ultérieur de la plate-forme intérieure de l'aube à fabriquer. Les déliaisons 204b, 206b s'étendent sur toute la largeur de l'ébauche 201 à partir de la deuxième extrémité longitudinale 201b de celle-ci jusqu'à des fonds de déliaison situés sensiblement au niveau de l'emplacement ultérieur de la plate-forme extérieure de l'ébauche à fabriquer. En outre, une déliaison 202a est formée sensiblement au milieu de la partie 202 sur toute la longueur de l'ébauche 201 et à distance de ses bords longitudinaux. La déliaison 202a est destinée à permettre la formation du passage interne de la pale de l'aube à fabriquer. Les déliaisons sont formées comme décrit plus haut pour l'ébauche 101 des figures 5 à 9.

Une préforme consolidée 214 de plate-forme intérieure est réalisée séparément (figure 16). La préforme 214 est obtenue à partir d'une structure fibreuse tissée 3D qui est mise dans la forme voulue par conformation dans un outillage et consolidée. La consolidation peut être réalisée comme décrit plus haut par imprégnation par une composition de consolidation contenant une résine, séchage et réticulation de la résine, après formation préalable d'une mince première couche de revêtement d'interphase sur les fibres de la structure fibreuse. La préforme 214 ainsi consolidée est usinée à sa forme définitive avec formation d'une ouverture 214a ayant une forme correspondant à celle du profil de la pale de l'aube à fabriquer au niveau de la plate-forme intérieure.

De la même façon, une préforme consolidée 216 de plate-forme extérieure (figure 17) est réalisée séparément, avec une ouverture 216a ayant une forme correspondant à celle du profil de la pale de l'aube à fabriquer au niveau de la plate-forme extérieure.

Après formation d'une mince première couche de revêtement d'interphase sur les fibres de l'ébauche fibreuse 201, imprégnation de celle-ci par une composition de consolidation et séchage, les préformes consolidées 214 et 216 sont engagées sur l'ébauche fibreuse 201 avec déformation de celle-ci (figure 18). Les volets constitués par les segments des parties 204 et 206 adjacents aux déliaisons 204a, 206a sont déployés et rabattus contre la face intérieure de la préforme consolidée 214 et peuvent être liés à celle-ci par exemple par implantation d'aiguilles. De manière similaire, les volets constitués par les segments des parties 204 et 206 adjacents aux déliaisons 204b, 206b sont déployés et rabattus contre la face extérieure de la préforme consolidée 216 et peuvent être liés à celle-ci.

Des découpes (montrées en pointillés sur la figure 18) sont pratiquées dans des segments d'extrémité longitudinale de la partie 202, à l'extérieur de la préforme consolidée 216 et à l'intérieur de la préforme consolidée 214 pour obtenir des parties destinées à former des parties de préforme 224, 226, 228 pour des pattes d'accrochage extérieures et des parties de préforme 234, 236, 238 pour des pattes intérieures de l'aube à fabriquer (figure 19).

Une préforme consolidée 210 de l'aube à fabriquer est obtenue (figure 19) par mise en forme dans un outillage, réticulation de la résine de la composition de consolidation de la préforme de pale, pattes d'accrochage extérieures et pattes intérieures, pyrolyse de la résine de consolidation des parties de préforme pour la pale, les pattes d'accrochage extérieures, pattes intérieures et les plates-formes, formation d'une deuxième couche de revêtement d'interphase et densification par une matrice céramique avec usinage final éventuel. Dans la préforme 210, la partie de préforme pour chaque patte d'accrochage extérieure est intégralement dans la continuité de la partie de préforme pour la paroi intrados ou la paroi extrados de la pale dans le prolongement de laquelle elle se situe. Il en est de même pour la partie de préforme pour chaque patte intérieure.

Les matériaux constitutifs des fibres de l'ébauche fibreuse 201 et des préformes consolidées 214, 216, des couches de revêtement d'interphase et de la matrice peuvent être similaires à ceux indiqués plus haut en relation avec le premier procédé de fabrication décrit.

On a envisagé ci-avant la réalisation d'une aube de distributeur de turbine en matériau CMC. L'invention est aussi applicable à des aubes de redresseur de compresseur pour leur montage dans un carter de compresseur. Dans ce dernier cas, lorsque les températures rencontrées en service sont moins élevées, notamment pour les étages amont d'un compresseur, on peut utiliser non pas un matériau CMC, mais un matériau composite à matrice organique (CMO) réalisé avec des fibres par exemple de carbone ou de verre et une matrice polymère.

Ainsi, après tissage d'un ensemble de bandes fibreuses, découpe d'ébauches individuelles et mise en forme au moyen d'un outillage de conformation, comme décrit plus haut, chaque préforme d'aube obtenue maintenue dans son outillage est imprégnée par une résine par injection ou infusion. Un traitement thermique de réticulation de la résine est effectué pour obtenir une préforme d'aube. Plusieurs cycles successifs d'imprégnation par une résine et réticulation de celle-ci peuvent être réalisés. Un usinage final peut éventuellement être réalisé. La résine utilisée pour consolidation et densification est une résine précurseur de matrice polymère, telle qu'une résiné époxyde, bismaléimide ou polyimide, par exemple.

De la même manière que les aubes de distributeur de turbine, les aubes à pale creuse de redresseur de compresseur sont montées dans le carter de compresseur avec une virole d'étanchéité disposée du côté extérieur des aubes et présentent des orifices communiquant avec les passages internes des pales des aubes. Des tubes de ventilation s'étendant dans les passages internes des pales des aubes peuvent être reliés à la virole par des pièces de liaison tubulaires.

Dans tous les modes de réalisation décrits, on obtient une aube dans laquelle la texture de renfort fibreux de chaque patte d'accrochage extérieure est intégralement dans la continuité de la texture de renfort fibreux de la paroi intrados ou de la paroi extrados de la pale dans le prolongement de laquelle la patte d'accrochage extérieure se situe. Un transfert de charge direct entre le profil aérodynamique de la pale et le carter via les pattes d'accrochage est ainsi assuré grâce à la continuité de la texture de renfort fibreux.

En outre, la texture de renfort fibreux de chaque patte intérieure éventuelle est aussi intégralement dans la continuité de la structure de renfort fibreux de la paroi intrados ou de la paroi extrados de la pale dans le prolongement de laquelle la patte intérieure se situe.

## Revendications

1. Aube (10) de turbomachine, l'aube étant en matériau composite comprenant une texture de renfort fibreux densifiée par une matrice et comportant une pale (12) creuse avec un passage interne (11) s'étendant sur toute sa longueur entre une paroi intrados (12a) et une paroi extrados (12b) de la pale, ainsi qu'une plate-forme intérieure (14) et une plate-forme extérieure (16) solidaires de la pale, **caractérisée en ce que** la pale est prolongée du côté extérieur de la plate-forme extérieure par une partie d'accrochage amont (22) et une partie d'accrochage aval (28) pour le montage de l'aube dans un carter, les parties d'accrochage étant formées par des pattes d'accrochage recourbées situées chacune dans le prolongement d'une partie de paroi intrados ou d'une partie de paroi extrados de la pale à partir d'une extrémité longitudinale extérieure, et la texture de renfort fibreux de chaque patte d'accrochage est dans la continuité de la texture de renfort fibreux de la paroi intrados ou de la paroi extrados dans le prolongement de laquelle elle se situe.

2. Aube selon la revendication 1, dans laquelle la partie d'accrochage aval (28) comprend au moins une patte d'accrochage aval située dans le prolongement d'une partie de la paroi extrados ou de la paroi intrados entre un bord d'attaque (12c) et un bord de fuite (12d) de la pale.

3. Aube selon l'une quelconque des revendications 1 et 2, dans laquelle la partie d'accrochage amont (22) comprend au moins une patte d'accrochage amont située dans le prolongement d'une partie de la paroi intrados ou de la paroi extrados au voisinage d'un bord d'attaque (12c) de la pale.

4. Aube selon la revendication 3, dans laquelle la partie d'accrochage amont comprend deux pattes d'accrochage amont (24,26) situées respectivement dans le prolongement d'une partie de la paroi intrados et dans le prolongement d'une partie de la paroi extrados au voisinage du bord d'attaque (12c) de la pale.

5. Aube selon l'une quelconque des revendications 1 à 4, dans laquelle, du côté intérieur de la plate-forme intérieure, la pale est prolongée par des pattes intérieures (34,36,38) s'étendant à partir d'extrémités longitudinales intérieures des parois intrados et extrados de la pale avec continuité de texture fibreuse de renfort entre lesdites parois et les pattes.

6. Aube selon la revendication 5, dans laquelle les pattes intérieures comprennent au moins une patte intérieure aval (38) située dans le prolongement d'une partie de la paroi extrados ou de la paroi intrados entre le bord d'attaque et le bord de fuite de la pale.

7. Aube selon l'une quelconque des revendications 5 et 6, dans laquelle les pattes intérieures comprennent au moins une patte intérieure amont (34,36) située dans le prolongement d'une partie de la paroi intrados ou de la paroi extrados au voisinage d'un bord d'attaque de la pale.

8. Aube selon la revendication 7, dans laquelle les pattes intérieures comprennent deux pattes intérieures amont (34,36) situées respectivement dans le prolongement d'une partie de paroi intrados et d'une partie de paroi extrados au voisinage du bord d'attaque de la pale.

9. Aube selon l'une quelconque des revendications 1 à 8, dans laquelle la texture de renfort fibreux de la pale est en tissu obtenu par tissage tridimensionnel.

10. Aube selon l'une quelconque des revendications 1 à 9, présentant une continuité de la texture de renfort fibreux entre la pale et les plates-formes intérieure et extérieure.

11. Turbine de turbomachine comprenant un carter (5) de turbine et au moins un distributeur (1) de turbine comportant un ensemble d'aubes (10) selon l'une quelconque des revendications 1 à 10.

12. Turbine selon la revendication 11, dans laquelle les aubes sont montées dans le carter de turbine avec une virole (60) d'étanchéité disposée du côté extérieur, et la virole présente des orifices (62) communiquant avec les passages internes (11) des pales des aubes.

13. Turbine selon la revendication 12, dans laquelle des tubes (66) de ventilation s'étendent dans les passages internes (11) des aubes et sont reliés à la virole (60) par des pièces (64) de liaison tubulaires.

14. Compresseur de turbomachine comprenant un carter de compresseur et au moins un redresseur de compresseur comportant un ensemble d'aubes (10) selon l'une quelconque des revendications 1 à 10.

15. Compresseur selon la revendication 14, dans lequel les aubes sont montées dans le carter de compresseur avec une virole d'étanchéité disposée du côté extérieur, et la virole présente des orifices communiquant avec les passages internes des pales des aubes.

16. Compresseur selon la revendication 15, dans lequel des tubes de ventilation s'étendent dans les passages internes des aubes et sont reliés à la virole par des pièces de liaison tubulaires.

17. Turbomachine ayant une turbine selon l'une quelconque des revendications 11 à 13, ou un compresseur selon l'une quelconque des revendications 14 à 16.

## Patentansprüche

1. Turbomaschinenschaufel (10), wobei die Schaufel aus Verbundmaterial besteht, das eine durch eine Matrix verdichtete faserige Verstärkungsstruktur aufweist, und ein hohles Schaufelblatt (12) mit einem inneren Durchgang (11), der sich über dessen gesamte Länge zwischen einer Druckwand (12a) und einer Saugwand (12b) des Schaufelblattes erstreckt, sowie eine innere Plattform (14) und eine äußere Plattform (16) aufweist, die mit dem Schaufelblatt fest verbunden sind, **dadurch gekennzeichnet, dass** das Schaufelblatt auf der Außenseite der äußeren Plattform durch einen stromaufwärtigen Befestigungsabschnitt (22) und einen stromabwärtigen Befestigungsabschnitt (28) zur Befestigung der Schaufel in einem Gehäuse verlängert ist, wobei die Befestigungsabschnitte durch gebogene Befestigungsfüße gebildet werden, die jeweils in der Verlängerung eines Abschnitts der Druckwand oder eines Abschnitts der Saugwand des Schaufelblattes von einem äußeren Längsende aus angeordnet sind, und die faserige Verstärkungsstruktur jedes Befestigungsfußes eine Fortsetzung der faserigen Verstärkungsstruktur der Druckwand oder der Saugwand darstellt, in deren Verlängerung er angeordnet ist.

2. Schaufel gemäß Anspruch 1, wobei der stromabwärtige Befestigungsabschnitt (28) mindestens einen stromabwärtigen Befestigungsfuß aufweist, der in der Verlängerung eines Abschnitts der Saugwand oder der Druckwand zwischen einer Anströmkante (12c) und einer Abströmkante (12d) des Schaufelblattes angeordnet ist.

3. Schaufel gemäß einem der Ansprüche 1 oder 2, wobei der stromaufwärtige Befestigungsabschnitt (22) mindestens einen stromaufwärtigen Befestigungsfuß aufweist, der in der Verlängerung eines Abschnitts der Druckwand oder der Saugwand benachbart zu einer Anströmkante (12c) des Schaufelblattes angeordnet ist.

4. Schaufel gemäß Anspruch 3, wobei der stromaufwärtige Befestigungsabschnitt zwei stromaufwärtige Befestigungsfüße (24, 26) aufweist, die jeweils in der Verlängerung eines Abschnitts der Druckwand oder in der Verlängerung eines Abschnitts der Saugwand benachbart zu der Anströmkante (12c) des Schaufelblattes angeordnet sind.

5. Schaufel gemäß einem der Ansprüche 1 bis 4, wobei die Schaufel auf der Innenseite der inneren Plattform durch innere Füße (34, 36, 38) verlängert ist, die sich von den inneren Längsenden der Druck- und Saugwände des Schaufelblattes erstrecken, wobei die faserige Verstärkungsstruktur zwischen den Wänden und den Füßen kontinuierlich ist.

6. Schaufel gemäß Anspruch 5, wobei die inneren Füße mindestens einen stromabwärtigen inneren Fuß (38) umfassen, der in der Verlängerung eines Abschnitts der Saugwand oder der Druckwand zwischen der Anströmkante und der Abströmkante des Schaufelblattes angeordnet ist.

7. Schaufel gemäß einem der Ansprüche 5 oder 6, wobei die inneren Füße mindestens einen stromaufwärtigen inneren Fuß (34, 36) umfassen, der in der Verlängerung eines Abschnitts der Druckwand oder der Saugwand benachbart zu einer Anströmkante des Schaufelblattes angeordnet ist.

8. Schaufel gemäß Anspruch 7, wobei die inneren Füße zwei stromaufwärtige innere Füße (34, 36) umfassen, die jeweils in der Verlängerung eines Abschnitts der Druckwand oder in der Verlängerung eines Abschnitts der Saugwand benachbart zu der Anströmkante des Schaufelblattes angeordnet sind.

9. Schaufel gemäß einem der Ansprüche 1 bis 8, wobei die faserige Verstärkungsstruktur des Schaufelblattes ein durch dreidimensionales Weben erhaltenes Gewebe ist.

10. Schaufel gemäß einem der Ansprüche 1 bis 9, die eine Kontinuität der faserigen Verstärkungsstruktur zwischen dem Schaufelblatt und der inneren und äußeren Plattform aufweist.

11. Turbine einer Turbomaschine, umfassend ein Turbinengehäuse (5) und mindestens einen Turbinenverteiler (1) mit einem Satz von Schaufeln (10) gemäß einem der Ansprüche 1 bis 10.

12. Turbine gemäß Anspruch 11, wobei die Schaufeln im Turbinengehäuse mit einem an der Außenseite angeordneten Dichtring (60) montiert sind und der Ring Öffnungen (62) aufweist, die mit den inneren Durchgängen (11) der Schaufelblätter in Verbindung stehen.

13. Turbine gemäß Anspruch 12, wobei sich Lüftungsrohre (66) in den inneren Durchgängen (11) der Schaufeln erstrecken und durch rohrförmige Verbindungsstücke (64) mit dem Ring (60) verbunden sind.

14. Verdichter für eine Turbomaschine, umfassend ein Verdichtergehäuse und mindestens einen Verdichtergleichrichter mit einem Satz von Schaufeln (10) gemäß einem der Ansprüche 1 bis 10.

15. Verdichter gemäß Anspruch 14, wobei die Schaufeln im Verdichtergehäuse mit einem an der Außenseite angeordneten Dichtring montiert sind und der Ring Öffnungen aufweist, die mit den inneren Durchgängen der Schaufelblätter in Verbindung stehen.

16. Verdichter gemäß Anspruch 15, wobei sich Lüftungsrohre in den inneren Durchgängen der Schaufeln erstrecken und durch rohrförmige Verbindungsstücke mit dem Ring verbunden sind.

17. Turbomaschine mit einer Turbine gemäß einem der Ansprüche 11 bis 13 oder einem Verdichter gemäß einem der Ansprüche 14 bis 16.

## Claims

1. A turbine engine vane (10), the vane being made of composite material comprising a fiber reinforcing structure densified by a matrix and comprising a hollow airfoil (12) with an internal passage (11) extending along its entire length between a pressure side wall (12a) and a suction side wall (12b) of the airfoil, as well as an inner platform (14) and an outer platform (16) attached to the airfoil,
**characterized in that** the airfoil is extended on the outside of the outer platform by an upstream attachment portion (22) and by a downstream attachment portion (28) for mounting the vane in a casing, the attachment portions being formed by curved attachment tabs each situated in line with a portion of the pressure side wall or a portion of the suction side wall of the airfoil from an outer longitudinal end, and the fiber reinforcing texture of each attachment tab is in continuity with the fiber reinforcing texture of the pressure side wall or the suction side wall in line with which the tab is situated.

2. A vane according to claim 1, wherein the downstream attachment portion (28) includes at least one downstream attachment tab situated in line with a portion of the suction side wall or of the pressure side wall between a leading edge (12c) and a trailing edge (12d) of the airfoil.

3. A vane according to anyone of claims 1 and 2, wherein the upstream attachment portion (22) includes at least one upstream attachment tab situated in line with a portion of the pressure side wall or of the suction side wall in the vicinity of a leading edge (12c) of the airfoil.

4. A vane according to claim 3, wherein the upstream attachment portion comprises two upstream attachment tabs (24, 26) situated respectively in line with a portion of the pressure side wall and in line with a portion of the suction side wall in the vicinity of the leading edge (12c) of the airfoil.

5. A vane according to any one of claims 1 to 4, wherein, on the inside of the inner platform, the airfoil is extended by inner tabs (34, 36, 38) extending from inner longitudinal ends of the pressure side and suction side walls of the airfoil with continuity of the reinforcing fiber texture between said walls and said tabs.

6. A vane according to claim 5, wherein the inner tabs comprise at least a downstream inner tab (38) situated in line with a portion of the suction side wall or with the pressure side wall between the leading edge and the trailing edge of the airfoil.

7. A vane according to anyone of claims 5 and 6, wherein the inner tabs comprise at least an upstream inner tab (34, 36) situated in line with a portion of the pressure side wall or of the suction side wall in the vicinity of a leading edge of the airfoil.

8. A vane according to claim 7, wherein the inner tabs comprise two upstream inner tabs (34, 36) situated respectively in line with a portion of the pressure side wall and with a portion of the suction side wall in the vicinity of the leading edge of the airfoil.

9. A vane according to any one of claims 1 to 8, wherein the fiber reinforcing texture of the airfoil is a fabric obtained by three-dimensional weaving.

10. A vane according to any one of claims 1 to 9, presenting continuity of the fiber reinforcing texture between the airfoil and the inner and outer platforms.

11. A turbine engine turbine comprising a turbine casing (5) and at least one turbine nozzle (1) including a set of vanes (10) according to any one of claims 1 to 10.

12. A turbine according to claim 11, wherein the vanes are mounted in the turbine casing with a sealing shroud (60) arranged on the outside, and the shroud presents orifices (62) in communication with the internal passages (11) of the airfoils of the vanes.

13. A turbine according to claim 12, wherein ventilation tubes (66) extend in the internal passages (11) of the vanes and are connected to the shroud (60) by tubular connection parts (64).

14. A turbine engine compressor comprising a compressor casing and at least one compressor diffuser including a set of vanes (10) according to any one of claims 1 to 10.

15. A compressor according to claim 14, wherein the vanes are mounted in the compressor casing with a sealing shroud arranged on the outside, and the shroud presents orifices in communication with the internal passages of the airfoils of the vanes.

16. A compressor according to claim 15, wherein the ventilation tubes extend in the internal passages of the vanes and are connected to the shroud by tubular connection parts.

17. A turbine engine having a turbine according to any one of claims 11 to 13, or a compressor according to any one of claims 14 to 16.
